# EUROPÄISCHE PATENTSCHRIFT

(11) **EP 3 287 665 B1**
(45) Veröffentlichungstag und Bekanntmachung des Hinweises auf die Patenterteilung: **30.09.2020**
(21) Anmeldenummer: 17182785.0
(22) Anmeldetag: 24.07.2017
(51) Int. Cl.: F16H 3/54, B60K 17/346

(54) **ZWEISTUFIGER PLANETENTRIEB FÜR EIN VERTEILERGETRIEBE UND VERTEILERGETRIEBE**
TWO-STAGE PLANETARY GEAR FOR A TRANSFER CASE AND TRANSFER CASE
ENTRAÎNEMENT PLANÉTAIRE À DEUX ÉTAGES POUR UNE BOÎTE DE TRANSFERT ET BOÎTE DE TRANSFERT

(30) Priorität: 26.08.2016 DE 102016216119
(43) Veröffentlichungstag der Anmeldung: 28.02.2018
(73) Patentinhaber: ZF Friedrichshafen AG, 88046 Friedrichshafen (DE)
(72) Erfinder: Brilka, Tobias, 94034 Passau (DE); Reitinger, Franz, 4092 Esternberg (AT)
(74) Vertreter: ZF Friedrichshafen AG

(56) Entgegenhaltungen:
- EP-A2- 1 036 691
- WO-A1-90/13760

## Beschreibung

Die Erfindung betrifft eine Gesamtheit mit einem Antriebsrad und einem zweistufigen Planetentrieb für ein Verteilergetriebe eines Kraftfahrzeugs gemäß dem Oberbegriff von Anspruch 1 sowie ein Verteilergetriebe gemäß dem Oberbegriff von Anspruch 7.

Im Stand der Technik sind zweistufige Verteilergetriebe bekannt, welche üblicherweise für ein mit mehr als zwei angetriebenen Antriebsrädern, beispielsweise ein vierradgetriebenes ermöglichen dabei z.B. oftmals die Realisierung eines Geländegangs neben einem Straßengang. Derartige zweistufige Verteilergetriebe sind dabei in der Regel in Vorgelegebauweise ausgeführt, was eine relativ kostengünstige, vielfach bewährte und gleichermaßen technisch einfache Lösung darstellt. Darüber hinaus sind aber auch zweistufige Verteilergetriebe in Planetenbauweise bekannt, welche gegenüber den in Vorgelegebauweise ausgebildeten Verteilergetrieben den Vorteil einer axial vergleichsweise raumsparenden Bauweise aufweisen.

In diesem Zusammenhang offenbart die DE 10 2011 086 061 A1 ein Verteilergetriebe mit einer Antriebswelle und einer ersten und zweiten Abtriebswelle, mit einer Schalteinrichtung zum Schalten eines Straßen- und eines Geländeganges und mit einem als Differenzialgetriebe wirkenden Planetengetriebe sowie mit einem als Schaltgetriebe wirkenden Planetengetriebe, deren Planetenträger drehfest miteinander verbunden sind. Im Straßengang ist die Schalteinrichtung so geschaltet, dass das als Gangschaltgetriebe wirkende Planetengetriebe als Block umläuft, wobei die Zahnräder in diesem Planetengetriebe nicht aneinander abwälzen.

Aus der DE 101 63 071 A1 ist ein schaltbares Planetengetriebe bekannt, welches koaxial zwischen einer Eingangswelle und einem anzutreibenden Rad, insbesondere einem Getrieberad, angeordnet ist, wobei das Rad an einem stationären Teil axial und radial gelagert ist. Das Planetengetriebe gemäß der DE 101 63 071 A1 umfasst ein konzentrisch im anzutreibenden Rad angeordnetes und mit der Eingangswelle drehfest verbundenes Sonnenrad. Weiterhin umfasst das Planetengetriebe einen relativ zum anzutreibenden Rad drehfesten und zusammen mit allen Planetenrädern axial zwischen zwei Endlagen verschiebbaren Planetenträger sowie ein axial mit dem Planetenträger zwangsgekoppeltes Hohlrad. Zwischen dem Sonnenrad bzw. einer Eingangswelle und dem Planetenträger ist eine erste Kupplung angeordnet, welche in einer axialen Endlage von Planetenträger und Hohlrad schließt und bei Verlassen der Endlage öffnet. Eine zweite Kupplung ist zwischen dem Hohlrad und dem stationären Teil angeordnet, wobei die zweite Kupplung in der anderen axialen Endlage von Planetenträger und Hohlrad schließt und bei Verlassen der dieser Endlage öffnet. Die bekannten zweistufigen Verteilergetriebe sind jedoch dahingehend nachteilbehaftet, als dass die in Vorgelegebauweise ausgebildeten zweistufigen Verteilergetriebe axial einen vergleichsweise großen Bauraumbedarf aufweisen. In verschiedensten Anwendungsfällen, wie z.B. in Kränen oder Sonderfahrzeugen, lassen sich auf Grund der dort üblicherweise beengten Platzverhältnisse derartige in Vorgelegebauweise ausgebildete zweistufige Verteilergetriebedeshalb nur schwer oder gar nicht verwenden. Die bekannten Verteilergetriebe, welche in Planetenbauweise ausgebildet sind, weisen demgegenüber den Nachteil auf, dass bei einem Schaltvorgang eine vergleichsweise große Masse verschoben werden muss. Dies erfordert hohe Schaltungskräfte und kann zu Verzögerungen in den Schaltvorgängen führen. 11

WO 90/13760 A1 offenbart eine Gesamtheit aus einem Antriebsrad und einem zweistufigen Planetentrieb gemäß dem Oberbegriff des Anspruchs 1.

Es ist eine Aufgabe der vorliegenden Erfindung, eine verbesserte Gesamtheit aus einem Antriebsrad und einem zweistufigen Planetentrieb für ein Verteilergetriebe vorzuschlagen.

Diese Aufgabe wird erfindungsgemäß durch die Gesamtheit gemäß Anspruch 1 gelöst. Vorteilhafte Ausgestaltungen und Weiterbildungen der Erfindung gehen aus den abhängigen Ansprüchen hervor.

Daraus ergibt sich gegenüber den bekannten, in Vorgelegebauweise ausgebildeten Verteilergetrieben der Vorteil, dass ein Verteilergetriebe, welches den erfindungsgemäßen Planetentrieb aufweist, axial vergleichsweise kompakt ausgebildet sein kann. Gegenüber den bekannten in Planetenbauweise ausgebildeten Verteilergetrieben ergibt sich der Vorteil, dass nicht die vergleichsweise große Masse des Planetenträgers mitsamt den Planetenrädern verschoben werden muss. Stattdessen wird erfindungsgemäß ausschließlich das Hohlrad axial verschoben. Das Hohlrad ist gegenüber dem Planetenträger mit den Planetenrädern jedoch vergleichsweise leichtgewichtig ausgebildet. Somit können Schaltvorgänge verzögerungsfrei ausgeführt werden und die notwendigerweise bereitzustellenden Schaltkräfte können geringer ausgelegt sein.

Der Planetentrieb ist bevorzugt sowohl axial als auch radial vollständig innerhalb eines Antriebsrads angeordnet. Je nach spezifischem Anwendungsfall kann es alternativ bevorzugt vorgesehen sein, dass der Planetentrieb in einer Richtung axial aus dem Antriebsrad herausragt, also ausschließlich radial vollständig innerhalb des Antriebsrads des Kraftfahrzeugs angeordnet ist.

Unter dem Begriff Antriebsrad wird im Sinne der Erfindung ein Zahnrad verstanden, welches ein in das Verteilergetriebe bzw. den Planetentrieb eingeleitetes Drehmoment wieder ausgibt.

Ein Verteilergetriebe mit dem erfindungsgemäßen Planetentrieb wird bevorzugt trieblich hinter einem Schaltgetriebe oder einem Automatikgetriebe derart angeordnet, dass es ein Antriebsmoment auf zwei Fahrzeugachsen, beispielsweise eine Vorder- und eine Hinterachse, verteilen kann. Der Planetentrieb ist dabei besonders bevorzugt Bestandteil eines Verteilergetriebes, wodurch das Verteilergetriebe schaltbar wird.

Gemäß Anspruch 1 ist es vorgesehen, dass das Hohlrad mittels einer axial verschieblich gelagerten Schaltmuffe in mindestens eine erste und eine zweite Axialposition verschiebbar ist. Das Hohlrad ist dabei drehfest und axialfest auf der Schaltmuffe angeordnet. Die erste Axialposition des Hohlrades bildet dabei bevorzugt eine erste Gangstufe des zweistufigen Planetentriebs. Die zweite Axialposition des Hohlrades bildet entsprechend die zweite Gangstufe des zweistufigen Planetentriebs. Die erste Gangstufe des Planetentriebs kann beispielsweise als Geländegang des Kraftfahrzeugs ausgebildet sein, wohingegen die zweite Gangstufe des Planetentriebs als Straßengang ausgebildet sein kann. Das Verschieben von Getrieberädern, wie beispielsweise des Hohlrades, bzw. das Schalten von Gangstufen in Getrieben mittels einer Schaltmuffe hat sich in zahlreichen Anwendungsfällen bewährt und als sehr robust erwiesen.

Ein Schaltvorgang von einer der beiden bereitgestellten Gangstufen des zweistufigen Planetentriebs in die jeweils andere Gangstufe erfolgt also durch axiales Verschieben des Hohlrades von der ersten in die zweite Axialposition bzw. umgekehrt.

Gemäß einer weiteren bevorzugten Ausführungsform der Erfindung ist es vorgesehen, dass das Hohlrad in einer ersten Axialposition über eine erste Kupplung drehfest mit einem Getriebegehäuse koppelbar ist. Dies ermöglicht bei geschlossener erster Kupplung ein Abrollen der Planetenräder im drehfest gehaltenen Hohlrad. Sofern z.B. über das Sonnenrad eine Eingangsdrehzahl in den Planetentrieb eingeleitet wird, kann diese Eingangsdrehzahl bei drehfest gehaltenem Hohlrad untersetzt werden und über den Planetenträger als Ausgangsdrehzahl bereitgestellt werden. Diese erste Axialposition kann beispielsweise dem Geländegang entsprechen.

Bevorzugt ist es vorgesehen, dass die erste Kupplung aus zwei ersten Kupplungshälften steht, wovon die eine Kupplungshälfte am Getriebegehäuse angeordnet ist und die andere Kupplungshälfte am Hohlrad angeordnet ist. In der ersten Axialposition des Hohlrades stehen die beiden Kupplungshälften derart miteinander in Kontakt, dass die erste Kupplung geschlossen ist, d.h., dass beide Kupplungshälften drehfest miteinander verbunden sind.

Gemäß einer weiteren bevorzugten Ausführungsform der Erfindung ist es vorgesehen, dass das Hohlrad in einer zweiten Axialposition über eine zweite Kupplung drehfest mit dem Sonnenrad oder mit dem Planetenträger koppelbar ist. Sowohl bei einer Kopplung mit dem Sonnenrad als auch bei einer Kopplung mit dem Planetenträger läuft der gesamte Planetentrieb in Block um. Somit entspricht die Eingangsdrehzahl der Eingangswelle der Ausgangsdrehzahl eines Antriebsrades. Diese zweite axiale Position kann beispielsweise dem Straßengang entsprechen.

Bevorzugt ist es vorgesehen, dass auch die zweite Kupplung aus zwei Kupplungshälften besteht. Eine dieser zwei Kupplungshälften ist dabei drehfest am Sonnenrad oder am Planetenträger angeordnet und die andere Kupplungshälfte ist drehfest am Hohlrad angeordnet. In der zweiten Axialposition des Hohlrades stehen die beiden Kupplungshälfte derart miteinander in Kontakt, dass die zweite Kupplung geschlossen ist, d.h., dass beide Kupplungshälften drehfest miteinander verbunden sind. Bei geschlossener zweiter Kupplung ist das Hohlrad also entweder drehfest mit dem Sonnenrad oder drehfest mit dem Planetenträger verbunden.

Sowohl die erste Kupplung als auch die zweite Kupplung können dabei wahlweise als Reibungskupplung oder als Formschlusskupplung ausgebildet sein. Im Falle einer Formschlusskupplung können die beiden Kupplungshälften z.B. über eine Verzahnung bzw. eine entsprechende Gegenverzahnung verfügen, die im geschlossenen Zustand der ersten bzw. zweiten Kupplung formschlüssig ineinander greifen und im geöffneten Zustand axial voneinander beabstandet sind.

Gemäß Anspruch 1 ist es vorgesehen, dass das Hohlrad mittels der Schaltmuffe zusätzlich in eine Neutralposition verschiebbar ist. Diese Neutralposition stellt also eine dritte einnehmbare Axialposition des Hohlrades dar. In der Neutralposition ist das Hohlrad weder mit dem Getriebegehäuse noch mit dem Sonnenrad oder dem Planetenträger gekoppelt, entsprechend sind sowohl die erste Kupplung als auch die zweite Kupplung geöffnet. Der Planetentrieb befindet sich damit im Leerlauf. In diesem Betriebszustand des Planetentriebs wird beispielsweise ein Abschleppvorgang des Kraftfahrzeugs begünstigt oder aber der Betrieb eines Nebenabtriebs im Stillstand des Kraftfahrzeugs ermöglicht.

Gemäß einer weiteren bevorzugten Ausführungsform der Erfindung ist es vorgesehen, dass das Hohlrad sich an den Planetenrädern abstützt und in permanentem Eingriff mit dem Planetenrädern steht. Daraus ergibt sich der Vorteil, dass eine gesonderte radiale Lagerung für das Hohlrad nicht bereitgestellt werden muss.

Bevorzugt ist es vorgesehen, dass die Planetenräder sowohl axial als auch radial auf dem Planetenträger gelagert sind.

Gemäß einer weiteren bevorzugten Ausführungsform der Erfindung ist es vorgesehen, dass das Sonnenrad axialfest und drehfest mit einer Eingangswelle verbunden ist. Somit können Eingangsdrehzahlen und Eingangsdrehmomente von der Eingangswelle über das Sonnenrad in den Planetentrieb eingeleitet werden.

Gemäß einer weiteren bevorzugten Ausführungsform der Erfindung ist es vorgesehen, dass der Planetenträger axialfest und drehfest mit einem Antriebsrad verbunden ist. Der Planetenträger und das Antriebsrad können dabei entweder einstückig ausgebildet sein oder aber mittels geeigneter Verbindungsmittel axialfest und drehfest miteinander verbunden sein. Bei einer einstückigen Ausbildungsweise ergibt sich eine besonders robuste und zuverlässige Verbindung. Zudem kann eine derartige Ausbildungsweise vergleichsweise leichtgewichtig ausgebildet sein, da die drehfest Verbindungsschnittstellen des Planetenträgers und des Antriebsrads nicht verstärkt werden müssen. Vorteilhaft entfallen in diesem Fall auch die Verbindungsmittel. Durch diese Verbindung des Planetenträgers mit dem Antriebsrad ergibt sich vorteilhafterweise zudem eine sehr robuste Lagerung des Planetenträgers.

Bevorzugt ist es vorgesehen, dass der Planetenträger über ein geeignetes Übertragungselement mit dem Antriebsrad verbunden ist.

Die Erfindung betrifft weiterhin ein Verteilergetriebe, umfassend mindestens einen erfindungsgemäßen Planetentrieb. Daraus ergeben sich die bereits im Zusammenhang mit dem Planetentrieb genannten Vorteile auch für das erfindungsgemäße Verteilergetriebe.

Gemäß einer bevorzugten Ausführungsform der Erfindung ist es vorgesehen, dass der mindestens eine Planetentrieb über eine oder mehrere Zwischenwellen in Triebverbindung mit einem Differentialgetriebe des Verteilergetriebes steht. Das Differentialgetriebe kann dabei bevorzugt ein Drehmoment bzw. eine Drehzahl zwischen mindestens zwei oder mehr Achsen bzw. zwischen mehreren erfindungsgemäßen Planetentrieben bzw. zwischen mehreren Antriebsrädern verteilen.

Bevorzugt ist es vorgesehen, dass das Differentialgetriebe in Kraftflussrichtung nach dem Planetentrieb angeordnet ist. Somit kann eine vom erfindungsgemäßen Gegentrieb bereitgestellte Ausgangsdrehzahl bzw. ein bereitgestelltes Ausgangsdrehmoment über das Differentialgetriebe weiter verteilt werden.

Die Zwischenwelle/n ermöglicht dabei einerseits eine größere räumliche Beabstandung des Planetentriebs vom Differentialgetriebe und andererseits eine Drehrichtungsumkehr.

Die Ausgangsdrehzahl bzw. das Ausgangsdrehmoment werden am Planetentrieb bevorzugt über den Planetenträger bereitgestellt.

Nachfolgend wird die Erfindung anhand von in den Figuren dargestellten Ausführungsformen beispielhaft erläutert.

Es zeigt:

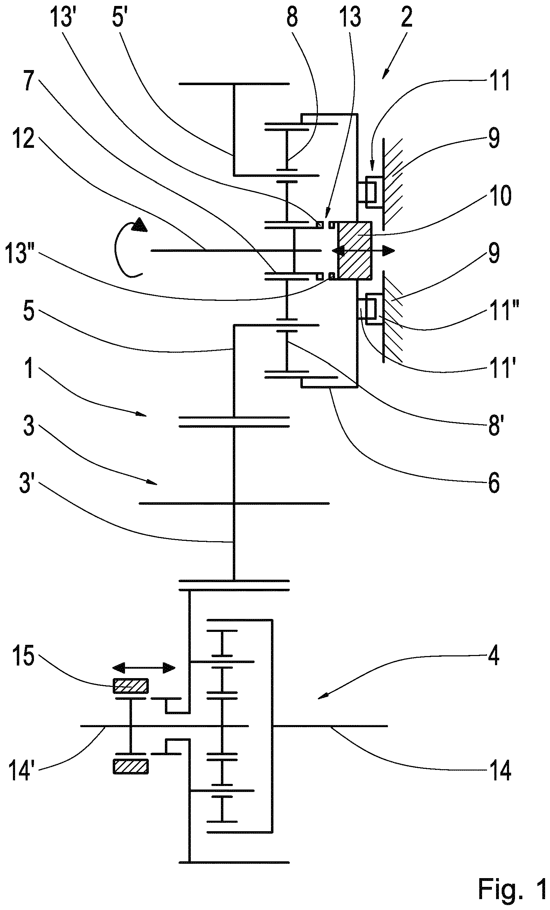

- Fig. 1: schematisch und beispielhaft eine mögliche Ausbildungsform eines erfindungsgemäßen Verteilergetriebes.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

Fig. 1 zeigt schematisch und beispielhaft eine mögliche Ausbildungsform eines erfindungsgemäßen Verteilergetriebes 1. Das Verteilergetriebe 1 umfasst einen erfindungsgemäßen Planetentrieb 2, eine Zwischenwelle 3 und ein Differentialgetriebe 4. Der Planetentrieb 2 wiederum umfasst seinerseits einen Planetenträger 5, ein Hohlrad 6, ein Sonnenrad 7 sowie beispielsgemäß zwei Planetenräder 8 und 8'. Der Planetentrieb 2 ist dabei in einem Getriebegehäuse 9 angeordnet, welches in der Darstellung der Fig. 1 nur ansatzweise zu sehen ist. Das Sonnenrad 7 ist dabei drehfest und axialfest auf einer Eingangswelle 12 angeordnet. Eine Eingangsdrehzahl bzw. ein Eingangsdrehmoment auf der Eingangswelle 12 wird über das Sonnenrad 7 in den Planetentrieb 2 eingeleitet. Das Sonnenrad 7 steht dabei in Eingriff mit den beiden Planetenrädern 8 und 8'. Diese wiederum sind axialfest auf dem Planetenträger 5 gelagert. Der Planetenträger 5 ist seinerseits drehfest und axialfest mit dem Antriebsrad 5' verbunden.

Mittels einer Schaltmuffe 10, welche axial verschiebbar gelagert ist, kann das Hohlrad 6 in drei verschiedene Axialpositionen gebracht werden. Das Hohlrad 6 ist dabei drehfest und axialfest auf der Schaltmuffe 6 angeordnet. In Fig. 1 befindet sich das Hohlrad in einer ersten Axialposition (rechts in der Darstellung der Fig. 1). In dieser ersten Axialposition ist das Hohlrad 6 über eine erste Kupplung 11 mit einem Getriebegehäuse 9 drehfest gekoppelt. Die erste Kupplung 11 ist beispielsgemäß ringförmig ausgebildet und besteht aus zwei Kupplungshälften 11' und 11". Bei der ersten Kupplung 11 handelt es sich um eine Formschlusskupplung. Die erste Kupplungshälfte 11' ist dabei drehfest am Hohlrad 6 angeordnet, während die zweite Kupplungshälfte 11' drehfest am Getriebegehäuse 9 angeordnet ist. Bei den Kupplungshälften 11' und 11" handelt es sich um eine Verzahnung 11' und eine entsprechende Gegenverzahnung 11", welche in der ersten Axialposition des Hohlrades 6 formschlüssig ineinander greifen. Somit ist die erste Kupplung 11 in der ersten Axialposition des Hohlrades 6 formschlüssig geschlossen. Es besteht also in der ersten Axialposition des Hohlrades 6 eine drehfeste Verbindung des Hohlrades 6 mit dem Getriebegehäuse 9. Eine über die Eingangswelle 12 eingeleitete Eingangsdrehzahl kann somit durch den Planetenrieb 2 untersetzt und über den Planetenträger 5 wieder abgegeben werden. In einer zweiten Axialposition des Hohlrades 6 (welche in Fig. 1 jedoch nicht dargestellt ist) ist das Hohlrad 6 beispielsgemäß über eine zweite Kupplung 13 drehfest mit dem Sonnenrad 7 gekoppelt. Auch die zweite Kupplung 13 besteht beispielsgemäß aus zwei Kupplungshälften 13' und 13". Die Kupplungshälften 13', 13" sind dabei als auf dem Sonnenrad 7 angeordnete Außenverzahnung 13' und entsprechend ausgebildete Innenverzahnung 13" ausgebildet, wobei die Innenverzahnung 13" an der Schaltmuffe 10 angeordnet ist. Die Innenverzahnung 13" ist als formschlüssige Gegenverzahnung zur Außenverzahnung 13' ausgebildet. Somit handelt es sich bei der zweiten Kupplung 13 also ebenfalls um eine Formschlusskupplung. Da die Schaltmuffe 10 drehfest und axialfest mit dem Hohlrad 6 verbunden ist, ergibt sich bei geschlossener zweiter Kupplung 13 entsprechend eine drehfeste Verbindung des Hohlrades 6 mit dem Sonnenrad 7. In der zweiten Axialposition des Hohlrades 6 läuft der Planetentrieb 2 somit im Block um. Dies bedeutet, dass die Eingangsdrehzahl der Eingangswelle 12 exakt der Ausgangsdrehzahl des Planetenträgers 5 entspricht. Weiterhin kann das Hohlrad 6 beispielsgemäß eine dritte Axialposition einnehmen, welche axial zwischen der ersten Axialposition und der zweiten Axialposition liegt. In dieser dritten Axialposition ist das Hohlrad 6 weder über die erste Kupplung 11 mit dem Getriebegehäuse 9 gekoppelt noch über die zweite Kupplung 13 mit dem Sonnenrad 7 gekoppelt. Es handelt sich bei der dritten Axialposition um eine sog. Neutralposition. In dieser Neutralposition wird eine Eingangsdrehzahl des Sonnenrads 7 nicht auf den Planetenträger 5 übertragen.

Für einen Schaltvorgang des in Fig. 1 beispielhaft gezeigten Planetentriebs 2 muss also ausschließlich das Hohlrad 6 von der ersten in die zweite bzw. in die dritte Axialposition geschaltet werden. Da das Hohlrad 6 alleine vergleichsweise leichtgewichtig ist, müssen über die Schaltaktuatorik keine besonderen Schaltkräfte bereitgestellt werden. Ebenso ergeben sich durch die vergleichsweise geringe zu bewegende Masse bei einem Schaltvorgang auch vergleichsweise kurze und schnelle Schaltzeiten.

Wie in Figur 1 weiterhin zu sehen ist, treibt der Planetenträger 5 auch die Zwischenwelle 3 bzw. ein auf der Zwischenwelle 3 gelagertes Zwischenrad 3' an. Die Zwischenwelle 3 bzw. das Zwischenrad 3' treiben nun ihrerseits das Differentialgetriebe 4 an. Das Differentialgetriebe 4 ist beispielsgemäß als Planetendifferentialgetriebe ausgebildet. Es ermöglicht über seine Abtriebswellen 14 und 14' die Verteilung eines Abtriebsdrehmomentes bzw. einer Abtriebsdrehzahl. Beispielsgemäß treibt die Abtriebswelle 14 dabei eine Vorderachse des Kraftfahrzeugs an, während die Abtriebswelle 14'eine Hinterachse des Kraftfahrzeugs antreibt. Über eine Schaltung 15 kann dabei die Momentenverteilung bzw. die Drehzahlverteilung blockiert oder freigegeben werden.

Gemäß einem weiteren, in Fig. 1 nicht dargestellten Ausführungsbeispiel, ist die Kupplungshälfte 13' nicht auf dem Sonnenrad 7 angeordnet, sondern auf dem Planetenträger 5. Die Kupplungshälfte 13" hingegen ist auch in diesem Fall an der Schaltmuffe 10 angeordnet. Weiterhin sind die Kupplungshälften 13', 13" auch in diesem Fall als Außenverzahnung 13' bzw. als zur Außenverzahnung 13' formschlüssig ausgebildete Innenverzahnung 13" ausgebildet. Somit ergibt sich in der zweiten Axialposition des Hohlrades 6 eine drehfeste Verbindung des Hohlrades 6 mit dem Planetenträger 5. Der Planetentrieb 2 läuft damit im Block um.

### Bezugszeichen

- 1: Verteilergetriebe
- 2: Planetenrieb
- 3: Zwischenwelle
- 3': Zwischenrad
- 4: Differentialgetriebe
- 5: Planetenträger
- 5': Antriebsrad
- 6: Hohlrad
- 7: Sonnenrad
- 8,8': Planetenrad
- 9: Getriebegehäuse
- 10: Schaltmuffe
- 11: erste Kupplung
- 11', 11": Kupplungshälften der ersten Kupplung
- 12: Eingangswelle
- 13: zweite Kupplung
- 13', 13": Kupplungshälften der zweiten Kupplung
- 14,14': Abtriebswelle
- 15: Schaltung

## Patentansprüche

1. Gesamtheit aus einem Antriebsrad (5') und einem zweistufigen Planetentrieb (2) für ein Verteilergetriebe (1) eines Kraftfahrzeugs, umfassend einen Planetenträger (5), ein Hohlrad (6), ein Sonnenrad (7) und Planetenräder (8, 8'), wobei der Planetentrieb (2) konzentrisch innerhalb des Antriebsrads (5') angeordnet ist,
wobei das Hohlrad (6) axial verschiebbar im Planetentrieb (2) angeordnet ist, wobei die Gesamtheit weiterhin eine Schaltmuffe (10) umfasst, wobei das Hohlrad (6) mittels der axial verschieblich gelagerten Schaltmuffe (10) in mindestens eine erste und eine zweite Axialposition verschiebbar ist, **dadurch gekennzeichnet, dass** das Hohlrad (6) mittels der Schaltmuffe (10) zusätzlich in eine Neutralposition verschiebbar ist.

2. Gesamtheit nach Anspruch 1,
**dadurch gekennzeichnet, dass** die Gesamtheit weiterhin eine erste Kupplung (11) und ein Getriebegehäuse umfasst, wobei das Hohlrad (6) in einer ersten Axialposition über eine erste Kupplung (11) drehfest mit dem Getriebegehäuse (9) koppelbar ist.

3. Gesamtheit nach mindestens einem der Ansprüche 1 und 2,
**dadurch gekennzeichnet, dass** das Hohlrad (6) in einer zweiten Axialposition über eine zweite Kupplung (1) drehfest mit dem Sonnenrad (7) oder mit dem Planetenträger (5) koppelbar ist.

4. Gesamtheit nach mindestens einem der Ansprüche 1 bis 3,
**dadurch gekennzeichnet, dass** das Hohlrad (6) sich an den Planetenrädern (8, 8') abstützt und in permanentem Eingriff mit den Planetenrädern (8, 8') steht.

5. Gesamtheit nach mindestens einem der Ansprüche 1 bis 4,
**dadurch gekennzeichnet, dass** das Sonnenrad (7) axialfest und drehfest mit einer Eingangswelle (12) verbunden ist.

6. Gesamtheit nach mindestens einem der Ansprüche 1 bis 5,
**dadurch gekennzeichnet, dass** der Planetenträger (5) axialfest und drehfest mit dem Antriebsrad (5') verbunden ist.

7. Verteilergetriebe (1), umfassend mindestens eine Gesamtheit nach mindestens einem der Ansprüche 1 bis 6.

8. Verteilergetriebe (1) nach Anspruch 7,
**dadurch gekennzeichnet, dass** die mindestens eine Gesamtheit über eine oder mehrere Zwischenwellen (3) in Triebverbindung mit einem Differentialgetriebe (4) des Verteilergetriebes (1) steht.

## Claims

1. Entity of a drive gear (5') and a two-stage planetary gear (2) for a transfer case (1) of a motor vehicle, the planetary gear (2) comprising an a planet-gear carrier (5), a ring gear (6), a sun gear (7) and planet gears (8, 8'), wherein the planetary gear (2) is disposed so as to be concentric within the drive gear (5'), wherein the ring gear (6) is disposed so as to be axially displaceable in the planetary gear (2), wherein the entity furthermore comprises a shift collar (10), wherein the ring gear (6) by means of the shift collar (10) that is mounted so as to be axially displaceable is displaceable to at least a first and a second axial position, **characterized in that** the ring gear (6) by means of the shift collar (10) is additionally displaceable to a neutral position.

2. Entity according to Claim 1, **characterized in that** the entity furthermore comprises a first clutch (11) and a gearbox housing, wherein the ring gear (6) in a first axial position by way of a first clutch (11) is able to be coupled in a rotationally fixed manner to the gearbox housing (9).

3. Entity according to at least one of Claims 1 and 2, **characterized in that** the ring gear (6) in a second axial position by way of a second clutch (13) is able to be coupled in a rotationally fixed manner to the sun gear (7) or to the planet-gear carrier (5) .

4. Entity according to at least one of Claims 1 to 3, **characterized in that** the ring gear (6) is supported on the planet gears (8, 8') and is permanently engaged with the planet gears (8, 8').

5. Entity according to at least one of Claims 1 to 4, **characterized in that** the sun gear (7) is connected in an axially fixed and rotationally fixed manner to an input shaft (12).

6. Entity according to at least one of Claims 1 to 5, **characterized in that** the planet-gear carrier (5) is connected in an axially fixed and rotationally fixed manner to the drive gear (5').

7. Transfer case (1), comprising at least one entity according to at least one of Claims 1 to 6.

8. Transfer case (1) according to Claim 7, **characterized in that** the at least one entity by way of one layshaft (3) or a plurality of layshafts (3) is drive-connected to a differential gear (4) of the transfer case (1).

## Revendications

1. Ensemble constitué d'une roue d'entraînement (5') et d'un entraînement planétaire à deux étages (2) pour une boîte de transfert (1) d'un véhicule automobile, comprenant un porte-satellites (5), une couronne dentée (6), une roue solaire (7) et des satellites (8, 8'), l'entraînement planétaire (2) étant disposé concentriquement à l'intérieur de la roue d'entraînement (5'), la couronne dentée (6) étant disposée de manière déplaçable axialement dans l'entraînement planétaire, l'ensemble comprenant en outre un manchon de commande (10), la couronne dentée (6) pouvant être déplacée au moyen du manchon de commande (10) supporté de manière déplaçable axialement dans au moins une première et une deuxième position axiale,
**caractérisé en ce que**
la couronne dentée (6) peut en outre être déplacée au moyen du manchon de commande (10) dans une position neutre.

2. Ensemble selon la revendication 1,
**caractérisé en ce que**
l'ensemble comprend en outre un premier embrayage (11) et un boîtier de transmission, la couronne dentée (6) pouvant être accouplée dans une première position axiale par le biais d'un premier embrayage (11) de manière solidaire en rotation au boîtier de transmission (9).

3. Ensemble selon au moins l'une des revendications 1 et 2,
**caractérisé en ce que**
la couronne dentée (6) peut être accouplée dans une deuxième position axiale par le biais d'un deuxième embrayage (13) de manière solidaire en rotation à la roue solaire (7) ou au porte-satellites (5).

4. Ensemble selon au moins l'une des revendications 1 à 3,
**caractérisé en ce que**
la couronne dentée (6) s'appuie sur les satellites (8, 8') et est en engagement permanent avec les satellites (8, 8').

5. Ensemble selon au moins l'une des revendications 1 à 4,
**caractérisé en ce que**
la roue solaire (7) est connectée de manière fixée axialement et de manière solidaire en rotation à un arbre d'entrée (12).

6. Ensemble selon au moins l'une des revendications 1 à 5,
**caractérisé en ce que**
le porte-satellites (5) est connecté de manière fixée axialement et de manière solidaire en rotation à la roue d'entraînement (5').

7. Boîte de transfert (1), comprenant au moins un ensemble selon au moins l'une des revendications 1 à 6.

8. Boîte de transfert (1) selon la revendication 7,
**caractérisée en ce que**
l'au moins un ensemble est en liaison d'entraînement par le biais d'un ou plusieurs arbres intermédiaires (3) avec un différentiel (4) de la boîte de transfert (1).
